# EUROPÄISCHE PATENTSCHRIFT

(11) **EP 3 728 758 B1**
(45) Veröffentlichungstag und Bekanntmachung des Hinweises auf die Patenterteilung: **30.10.2024**
(21) Anmeldenummer: 18836451.7
(22) Anmeldetag: 18.12.2018
(51) Int. Cl.: E04D 13/00, E04D 5/12, E04D 5/10, G01M 3/16, G01M 3/40, G01M 3/04

(54) **BAUSTOFF, INSBESONDERE DACHBAUSTOFF**
BUILDING MATERIAL, IN PARTICULAR ROOF BUILDING MATERIAL
MATÉRIAU DE CONSTRUCTION, EN PARTICULIER ÉLÉMENT DE CONSTRUCTION DE TOIT

(30) Priorität: 18.12.2017 AT 510432017
(43) Veröffentlichungstag der Anmeldung: 28.10.2020
(73) Patentinhaber: "AUSTYROL" DÄMMSTOFFE Gesellschaft m.b.H., 2340 Mölding (AT)
(72) Erfinder: NEUMAYER, Michael, 4903 Manning (AT); MITTENDORFER, Fridolin Michael, 4863 Seewalchen (AT); ENGELBRECHT, Gerhard, 4810 Gmunden (AT)
(74) Vertreter: Jell, Friedrich
(86) Internationale Anmeldenummer: PCT/AT2018/060307
(87) Internationale Veröffentlichungsnummer: WO 2019/119007

(56) Entgegenhaltungen:
- EP-A1- 1 659 224
- EP-A1- 2 236 691
- EP-A1- 3 168 589
- EP-A2- 0 441 241
- WO-A1-2016/058732
- WO-A1-2017/061470
- FR-A1- 2 912 427
- GB-A- 1 418 997
- US-A- 4 965 554
- US-A- 5 463 377
- US-A1- 2016 166 757

## Beschreibung

Die Erfindung betrifft einen Baustoff, insbesondere Dachbaustoff, in Rollen- oder Bahnform, mit einer Verbundstruktur, die eine erste Lage, eine Trägermateriallage und eine zwischen Trägermateriallage und ersten Lage angeordnete Klebstoffschicht aufweist, wobei die erste Lage mit der Klebstoffschicht fest verbunden ist und die Trägermateriallage mit der Klebstoffschicht lösbar verbunden ist.

### Technisches Gebiet

Aus WO 2017/061470 A1 is ein flüssigkeitsdetektierendes Element bekannt.

Aus dem Stand der Technik sind ferner aufgerollte Bahnen eines Baustoffs, insbesondere Dachbaustoffs, mit einer Verbundstruktur, beispielsweise für Flachdächer etc., bekannt (EP0441241B1). Derartige Dachbaustoffe weisen im Wesentlichen eine erste Lage, eine Trägermateriallage und eine zwischen Trägermateriallage und ersten Lage angeordnete Klebstoffschicht auf. Diese Lagen sind über die Klebstoffschicht lösbar miteinander verbunden, um diese an andere Baustoffe zu befestigen. Nachteilig kann nach deren Montage vergleichsweise schwer bzw. gar nicht nachvollzogen werden, ob die Montage bestimmungsgemäß erfolgt ist, zumal nach deren Montage diese für eine Überprüfung meist auch nicht mehr zugänglich sind.

### Stand der Technik

Die Erfindung hat sich daher ausgehend vom eingangs geschilderten Stand der Technik die Aufgabe gestellt, einen Baustoff, insbesondere Dachbaustoff, in Rollen- oder Bahnform derart konstruktiv zu verändern, dass dieser selbst nach seiner Montage einer Überprüfung - auch hinsichtlich seiner Standfestigkeit - zugänglich ist.

### Darstellung der Erfindung

Die Erfindung löst die gestellte Aufgabe durch die Merkmale des Anspruchs 1.

Die erste Lage weist sowohl Cellulose als auch auf der Lagenseite, welche der Trägermateriallage abgewandt ist, mindestens eine aufgedruckte, elektrisch leitfähige Elektrodenstruktur auf, die mit der Cellulose der ersten Lage einen Sensor ausbildet: so kann sich die Möglichkeit eröffnen, den Baustoff in Rollen- oder Bahnform über den, insbesondere passiven, beispielsweise kapazitiven, Sensor auch nach dessen Montage noch zu überprüfen. Über die Einbeziehung der Cellulose der ersten Lage in die Sensorfunktion kann nämlich anhand der Sensordaten auf die Funktionstüchtigkeit des erfindungsgemäßen Baustoffs rückgeschlossen und damit unter anderem der Einbauzustand auf Richtigkeit überprüft werden - dies auch bei verdeckter Montage bzw. Unzugänglichkeit im verbauten Zustand.

Zudem kann der Baustoff in Rollen- oder Bahnform auch dazu beitragen, die Funktionssicherheit des Bauteils zu überwachen. Anhand der Sensordaten des erfindungsgemäßen Baustoffs kann nämlich beispielsweise das Bauwerk oder Dach auf Wassereintritt, Kondensatbildung bzw. Feuchtigkeit im Allgemeinen sowie auch in Bezug auf unerwartete Temperaturschwankungen etc. überwacht werden.

Der erfindungsgemäße Baustoff ist daher nicht nur nach seiner Montage auf korrekte Verwendung überprüfbar, sondern kann zusätzlich auch zur Überwachung der Baustruktur beitragen.

Im Allgemeinen wird erwähnt, dass der Baustoff in Rollen- oder Bahnform ein Dachbaustoff, eine Dachbahn, ein Trockenbaustoff oder ein Bodenbaustoff etc. sein kann.

Die Messdatenerfassung des Baustoffs wird weiter verbessert, indem über die, vorzugsweise gesamte, Bahnlänge des Baustoffs wiederholt Elektrodenstrukturen vorgesehen sind, die mit der Cellulose der ersten Lage je einen Sensor ausbilden. Außerdem kann damit der Baustoff über seine verbaute Länge verbessert überprüft werden.

Vorzugsweise sind die Elektrodenstrukturen in Reihe nacheinander angeordnet, um über die Länge des Baustoffs den Einbauzustand auf Richtigkeit überprüfen zu können.

Je nach Breite des Baustoffs kann es von Vorteil sein, wenn die Elektrodenstrukturen in mehreren, insbesondere in zwei, zueinander versetzten - beispielsweise zueinander auf Lücke mittig versetzten - Reihen angeordnet sind, um so für eine ausreichende Überwachung bzw. Kontrolle des Baustoffs sorgen zu können.

Weist die erste Lage aufgedruckte elektrische Leiter auf, die in Bahnlängsrichtung verlaufend die Elektrodenstrukturen elektrisch verbinden, kann die elektrische Kontaktierung des Baustoffs erleichtert werden.

Der Konstruktionsaufwand am Baustoff kann weiter reduziert werden, wenn die elektrischen Leiter aus Hinleiter und Rückleiter bestehen, an welche Hin- und Rückleiter die Elektrodenstrukturen elektrisch parallel verschaltet angeschlossen sind. Durch die parallele Verschaltung der Elektrodenstrukturen kann es zudem einfacher werden, den Baustoff elektrisch zu kontaktieren.

Die örtliche Auflösung von detektierten Defekten kann weiter erhöht werden, wenn jede Reihe an Elektrodenstrukturen an einem Hin- und einem Rückleiter elektrisch parallel verschaltet angeschlossen sind.

Sind die Elektrodenstrukturen zwischen den elektrischen Leitern angeordnet, ist die Konstruktion des Baustoffs weiter vereinfachbar - ohne Einschränkungen in der Funktion befürchten zu müssen.

Eine vergleichsweise einfach handhabbare Möglichkeit zur elektrischen Kontaktierung der Elektrodenstruktur kann sich ergeben, wenn elektrische Leiter am Bahnlängsrand verlaufen.

Die Sensorempfindlichkeit ist zusätzliche erhöhbar, wenn die gedruckte elektrisch leitfähige Elektrodenstruktur aus einer festen Paste oder Tinte mit einer Karbon-Basis besteht.

Weist die erste Lage einen bioziden, fungiziden und/oder bakteriziden Wirkstoff als Füllstoff auf, kann dies zur Verbesserung der Beständigkeit des Baustoffs beitragen.

Die Aufbringung der Elektrodenstruktur kann erleichtert sowie die Empfindlichkeit des Sensors weiter verbessert werden, wenn die erste Lage einen Anteil an Cellulose von 60 bis 90%, vorzugsweise 65 bis 79%, insbesondere 72%, und als Rest Füllstoff aufweist.

Die Standfestigkeit des Baustoffs kann weiter erhöht werden, wenn die erste Lage ein Flächengewicht von mehr als 70 g/m², insbesondere 90 g/m²aufweist.

Konstruktive Einfachheit kann erreicht werden, wenn die erste Lage ein Etikettenpapier ist.

Weist die Trägermateriallage ein Trennmittel, insbesondere Silikon, auf, kann dies die Handhabung des Baustoffs weiter erleichtern - insbesondere, wenn die Trägermateriallage von der ersten Lage mit der Elektrodenstruktur abgezogen werden soll.

Eine besonders genaue Überprüfung des Baustoffs kann ermöglicht werden, wenn die Elektrodenstruktur mit der Cellulose der ersten Lage einen Feuchtigkeits- und/oder Temperatursensor ausbildet.

Die Konstruktion des Baustoffs kann weiter vereinfacht werden, wenn die Elektrodenstruktur ineinandergreifende Fingerelektroden aufweist.

Für eine ausreichende Ortsauflösung einer Fehlstelle am Baustoff kann ausreichend sein, wenn der Abstand zwischen zwei aufeinander folgenden Elektrodenstrukturen größer gleich 0,5 m, insbesondere größer gleich 2 m ist.

### Kurze Beschreibung der Zeichnung

In den Figuren ist beispielsweise der Erfindungsgegenstand anhand mehrere Ausführungsvarianten näher dargestellt. Es zeigen
- Fig. 1: eine seitlich abgerissene Ansicht in Querrichtung eines bahnförmigen Baustoffs,
- Fig. 2: eine Draufsicht auf den Baustoff nach Fig. 1 dargestellten Baustoff in abgerissener Darstellung nach einem ersten Ausführungsbeispiel und
- Fig. 3: eine Draufsicht auf den Baustoff nach Fig. 1 dargestellten Baustoff in abgerissener Darstellung nach einem zweiten Ausführungsbeispiel.

### Weg zur Ausführung der Erfindung

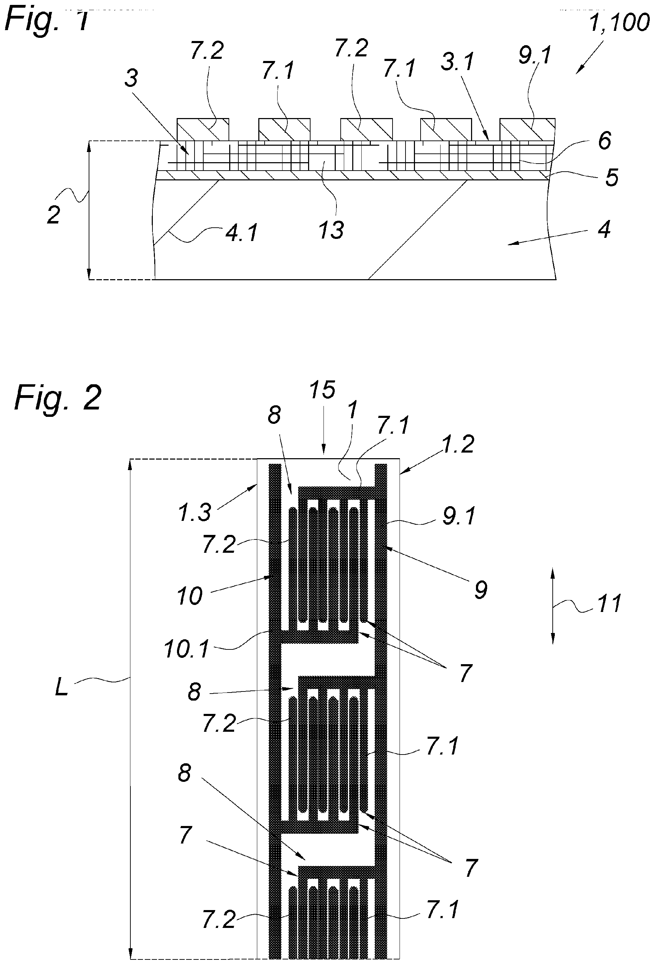

Nach den Figuren 1, 2 und 3 wird beispielsweise ein Baustoff 1, 100, nämlich ein Dachbaustoff, in Bahnform gezeigt, welcher von einer nicht dargestellten Rolle abgerollt wurde. Der Baustoff 1, 100 weist eine Verbundstruktur 2 auf, nämlich aus einer ersten Lage 3, einer Trägermateriallage 4 und einer zwischen Trägermateriallage 4 und ersten Lage 3 angeordneten Klebstoffschicht 5.

Die Trägermateriallage 4 kann im Bedarfsfall von der ersten Lage 3 getrennt werden, da die erste Lage 3 mit der Klebstoffschicht 5 fest verbunden ist, während die Trägermateriallage 4 mit der Klebstoffschicht 5 lösbar verbunden ist. Damit kann die erste Lage 3 mit der Klebstoffschicht 5 auf einen anderen nicht dargestellten Baustoff 1, 100 aufgeklebt werden. Außerdem weist die Trägermateriallage 4 ein Trennmittel 4.1, insbesondere Silikon, auf, um diese Trennung zu erleichtern.

Erfindungsgemäß weist die erste Lage 3 Cellulose 6 auf. Derart ist es möglich, den Baustoff 1, 100 standfest zu funktionalisieren, indem auf der Lagenseite 3.1, welche der Trägermateriallage 4 abgewandt ist, eine aufgedruckte und elektrisch leitfähige Elektrodenstruktur 7 vorgesehen wird. Solch eine Elektrodenstruktur 7 ist in Fig. 2 in Draufsicht beispielswiese zu erkennen. Die Elektrodenstruktur 7 wirkt mit der Cellulose 6 der ersten Lage 3 zur Ausbildung eines passiven Sensors 8, nämlich Feuchtigkeitssensors, elektrisch, beispielsweise resistiv und/oder kapazitiv, zusammen. Beispielsweise kann in Abhängigkeit der elektrischen Leitfähigkeit der Cellulose 6 auf einen Feuchtegrad der Cellulose 6 geschlossen und damit der Einbauzustand des Baustoffs 1, 100 überprüft werden. Auch kann eine sich ändernde Dielektrizitätskonstante der Cellulose 6 durch Adsorption und Desorption von Wasserdampf oder Feuchtigkeit detektiert werden. Der damit kapazitive Sensor 8 reagiert somit auf eine Änderung seiner elektrostatischen Kapazität.

Vorstellbar ist zudem, dass alternativ oder zusätzlich die Elektrodenstruktur 7 mit der Cellulose 6 der ersten Lage 3 zur Ausbildung eines Temperatursensors zusammenwirkt.

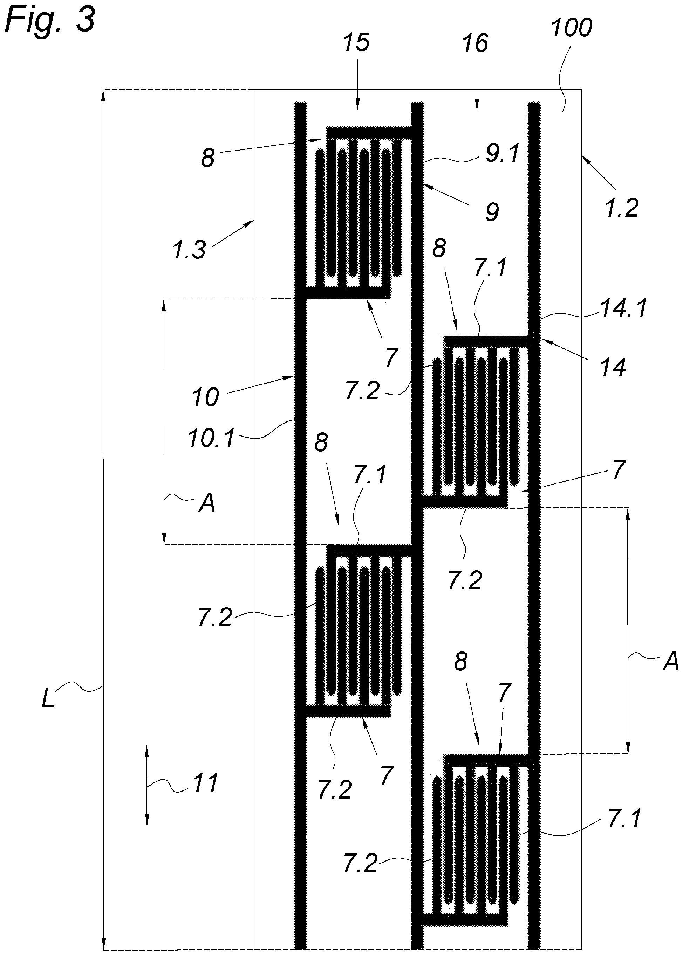

Wie zudem den Figuren 2 und 3 zu entnehmen, bilden ineinandergreifende Fingerelektroden 7.1, 7.2 die Elektrodenstruktur 7 aus, was die Empfindlichkeit des Sensors 8 verbessert. Insbesondere haben sich vier ineinandergreifende Fingerelektroden 7.1, 7.2 als ausreichend herausgestellt, den Baustoff 1 zu überwachen. Die Fingerelektroden 7.1, 7.2 können unterschiedliche Abstände zueinander und/oder unterschiedliche Länge und/oder Breite aufweisen. Vorzugsweise sind die Fingerelektroden 7.1, 7.2 zueinander spiegelsymmetrisch.

Aufgrund dieser Funktionalisierung des Baustoffs 1, 100 ist dieser selbst im verbauten Zustand auf korrekten Einbau überprüfbar. Zudem ist anhand der Messdaten zum Feuchtigkeitssensors und/oder Temperatursensor die Baustruktur überwachbar. Der Baustoff 1, 100 ist sohin beispielsweise zur Detektion eines Wassereintritts bei einem Dach einsetzbar, wodurch etwa Schäden an der Baustruktur vorzeitig festgestellt werden können.

Wie in den Figuren 2 und 3 zu erkennen, sind im Ausführungsbeispiel über die gesamte Bahnlänge L des Baustoffs 1, 100 wiederholt Elektrodenstrukturen 7 vorgesehen. Damit ist der Baustoff 1, 100 äußerst genau zu überprüfen bzw. kann im verbauten Zustand auch die Baustruktur lückenlos überwacht werden. Des Weiteren ist es dadurch möglich, anhand einer anschlagenden Elektrodenstruktur 7 die Lage bzw. den Ort der Singularität zu bestimmen - was eine Reparatur/Instandsetzung des Baustoffs 1, 100 und/oder der Baustruktur erleichtert.

Der Baustoff 1 nach Fig. 2 weist zwei elektrische Leiter 9, 10 auf. Der Baustoff nach Fig. 3 weist drei elektrische Leiter 9, 10, 14 auf. Damit ist der Baustoff 1, 100 an einem Bahnende 1.1 verhältnismäßig einfach elektrisch kontaktierbar, da die erste Lage 3 auch aufgedruckte elektrische Leiter 9, 10, 14 aufweist, welche in Bahnlängsrichtung 11 verlaufen, nämlich jeweils an einem Bahnlängsrand 1.2 oder 1.3 entlang. Die elektrischen Leiter 9, 10, 14 bilden Hin- und Rückleiter 9.1, 10.1, 14.1 aus, an welche jeweiligen Hin- und Rückleiter 9.1, 10.1, 14.1 die Elektrodenstrukturen 7 elektrisch parallel verschaltet angeschlossen sind - wie den Figuren 2 und 3 zu entnehmen.

Wie in den Figuren 2 und 3 dargestellt, sind die Elektrodenstrukturen 7 in Reihe 15, 16 nacheinander angeordnet, wobei die Elektrodenstrukturen 7 nach Fig. 2 in einer Reihe 15 und nach Fig. 3 in zwei Reihen 15, 16 nacheinander angeordnet sind. Diese zwei Reihen 15, 16 sind zueinander versetzt, vorzugsweise auf Lücke zueinander versetzt, was eine Ortsauflösung bei der Detektion einer Fehlerstelle am Baumaterial 1 erhöht.

Nach Fig. 2 sind die Elektrodenstrukturen 7 zwischen einem ersten Hinleiter 9.1 und einem ersten Rückleiter 10.1 parallel verschaltet angeschossen. Nach Fig. 3 sind die Elektrodenstrukturen 7 jeder Reihe 15, 16 zwischen dem ersten Hinleiter 9.1 und einem jeweiligen ersten bzw. zweiten Rückleiter 10.1 bzw. 14.1 parallel verschaltet angeschossen.

Die Elektrodenstruktur 7 wird durch eine feste Paste oder Tinte mit einer Karbon-Basis gebildet, welche durch ein Druckverfahren auf die erste Lage 3 aufgebracht wird. Diese erste Lage 3 weist Cellulose 6 auf - was ein Drucken erleichtert und auch zu einer standfesten stoffschlüssigen Verbindung zwischen erste Lage 3 und Elektrodenstruktur 7 führt.

Zudem ist die erste Lage 3 mit einem bioziden, fungiziden und/oder bakteriziden Wirkstoff als Füllstoff 13 versehen bzw. die Cellulose 6 diesbezüglich getränkt - was dem Baustoff 1 eine hohe Beständigkeit gibt. Der Füllstoff kann auch noch ein Nassfestmittel etc. aufweisen.

Die erste Lage 3 weist zudem einen Bindemittelauftrag bzw. Strich auf. Das Bindemittel bzw. die Streichfarbe kann Kreide, Kaolin, Kasein, Kunststoffdispersion, Antischäumer, optische Aufheller und/oder Biozide etc. enthalten.

Vorteilhaft hat sich für die Funktionalisierung und Lebensdauer des Baustoffs 1 herausgestellt, wenn die erste Lage 3 ein Etikettenpapier ist, die Klebstoffschicht 5 eine Acrylbasis aufweist und die Trägermateriallage 4 aus einem Trennpapier oder einer Trennfolie besteht.

Die Klebstoffschicht 5 weist ein Flächengewicht von mehr als 30 g/m², vorzugsweise beträgt es 40 g/m².

Die erste Lage 3 weist ein Flächengewicht von mehr als 70 g/m² auf, vorzugsweise beträgt die Stärke 90 g/m². Die erste Lage 3 weist einen Anteil an Cellulose 6 von 60 bis 90%, vorzugsweise 65 bis 79%, nämlich 72%, und als Rest Füllstoff auf.

Die Trägermateriallage 4 ist vorzugsweise ein Silikonpapier als Trennpapier.

Der Abstand A zwischen zwei aufeinander folgenden Elektrodenstrukturen 7 größer gleich 2 m, was für ausreichend ist, eine hohe Ortsauflösung zu ermöglichen.

## Patentansprüche

1. Baustoff, insbesondere Dachbaustoff, in Rollen- oder Bahnform, mit einer Verbundstruktur (2), die eine erste Lage (3), eine Trägermateriallage (4) und eine zwischen Trägermateriallage (4) und ersten Lage (3) angeordnete Klebstoffschicht (5) aufweist, wobei die erste Lage (3) mit der Klebstoffschicht (5) fest verbunden ist und die Trägermateriallage (4) mit der Klebstoffschicht (5) lösbar verbunden ist, **dadurch gekennzeichnet, dass** die erste Lage (3) sowohl Cellulose (6) als auch auf der Lagenseite (3.1), welche der Trägermateriallage (4) abgewandt ist, mindestens eine aufgedruckte, elektrisch leitfähige Elektrodenstruktur (7) aufweist, die mit der Cellulose (6) der ersten Lage (3) einen Sensor (8) ausbildet, wobei über die Bahnlänge (L) des Baustoffs (1) wiederholt Elektrodenstrukturen (7) vorgesehen sind, die mit der Cellulose (6) der ersten Lage (3) je einen Sensor (8) ausbilden.

2. Baustoff nach Anspruch 1, **dadurch gekennzeichnet, dass** über die gesamte Bahnlänge (L) des Baustoffs (1) wiederholt Elektrodenstrukturen (7) vorgesehen sind, die mit der Cellulose (6) der ersten Lage (3) je einen Sensor (8) ausbilden.

3. Baustoff nach Anspruch 2, **dadurch gekennzeichnet, dass** die Elektrodenstrukturen (7) in Reihe (15, 16) nacheinander angeordnet sind.

4. Baustoff nach Anspruch 3, **dadurch gekennzeichnet, dass** die Elektrodenstrukturen (7) in mehreren, insbesondere in zwei, zueinander versetzten, Reihen (15, 16) angeordnet sind.

5. Baustoff nach einem der Ansprüche 2 bis 4, **dadurch gekennzeichnet, dass** die erste Lage (3) aufgedruckte elektrische Leiter (9, 10, 14) aufweist, die in Bahnlängsrichtung verlaufend die Elektrodenstrukturen (7) elektrisch verbinden.

6. Baustoff nach Anspruch 5, **dadurch gekennzeichnet, dass** die elektrischen Leiter (9, 10, 14) aus Hinleiter (9.1) und Rückleiter (10.1, 14.1) bestehen, an welche Hin- und Rückleiter (9.1, 10.1, 14.1) die Elektrodenstrukturen (7) elektrisch parallel verschaltet angeschlossen sind.

7. Baustoff nach Anspruch 6, **dadurch gekennzeichnet, dass** jede Reihe (15, 16) an Elektrodenstrukturen (7) an einem Hin- und einem Rückleiter (9.1, 10.1 bzw. 9.1, 14.1) elektrisch parallel verschaltet angeschlossen sind.

8. Baustoff nach einem der Ansprüche 5 bis 7, **dadurch gekennzeichnet, dass** die Elektrodenstrukturen (7) zwischen den elektrischen Leitern (9, 10, 14) angeordnet sind.

9. Baustoff nach einem der Ansprüche 5 bis 8, **dadurch gekennzeichnet, dass** elektrische Leiter (9, 10, 14) am Bahnlängsrand (1.2, 1.3) verlaufen.

10. Baustoff nach einem der Ansprüche 1 bis 9, **dadurch gekennzeichnet, dass** die gedruckte, elektrisch leitfähige Elektrodenstruktur (7) aus einer festen Paste oder Tinte mit einer Karbon-Basis besteht.

11. Baustoff nach einem der Ansprüche 1 bis 10, **dadurch gekennzeichnet, dass** die erste Lage (3) einen bioziden, fungiziden und/oder bakteriziden Wirkstoff als Füllstoff (13) aufweist.

12. Baustoff nach einem der Ansprüche 1 bis 11, **dadurch gekennzeichnet, dass** die erste Lage (3) einen Anteil an Cellulose (6) von 60 bis 90%, vorzugsweise 65 bis 79%, insbesondere 72%, und als Rest Füllstoff (13) aufweist.

13. Baustoff nach einem der Ansprüche 1 bis 12, **dadurch gekennzeichnet, dass** die erste Lage (3) ein Flächengewicht von mehr als 70 g/m², insbesondere 90 g/m², aufweist.

14. Baustoff nach einem der Ansprüche 1 bis 13, **dadurch gekennzeichnet, dass** die erste Lage ein Etikettenpapier ist.

15. Baustoff nach einem der Ansprüche 1 bis 14, **dadurch gekennzeichnet**, die Trägermateriallage (4) ein Trennmittel (4.1), insbesondere Silikon, aufweist.

16. Baustoff nach einem der Ansprüche 1 bis 15, **dadurch gekennzeichnet, dass** die Elektrodenstruktur (7) mit der Cellulose (6) der ersten Lage (3) einen Feuchtigkeits- und/oder Temperatursensor (8) ausbildet.

17. Baustoff nach einem der Ansprüche 1 bis 16, **dadurch gekennzeichnet, dass** die Elektrodenstruktur (7) ineinandergreifende Fingerelektroden (7.1, 7.2) aufweist.

18. Baustoff nach einem der Ansprüche 1 bis 17, **dadurch gekennzeichnet, dass** der Abstand (A) zwischen zwei aufeinander folgenden Elektrodenstrukturen (7) größer gleich 0,5 m, insbesondere größer gleich 2 m, ist.

## Claims

1. Building material, more particularly roofing material, in roll or sheet form, having a composite structure (2) which has a first layer (3), a backing material layer (4) and an adhesive layer (5) arranged between the backing material layer (4) and the first layer (3), wherein the first layer (3) is firmly bonded to the adhesive layer (5) and the backing material layer (4) is releasably bonded to the adhesive layer (5), **characterized in that** the first layer (3) comprises both cellulose (6) and, on the layer side (3. 1) which faces away from the backing material layer (4), has at least one printed, electrically conductive electrode structure (7) which forms a sensor (8) with the cellulose (6) of the first layer (3), wherein electrode structures (7) are provided repeatedly over the web length (L) of the building material (1), which each form a sensor (8) with the cellulose (6) of the first layer (3).

2. Building material according to claim 1, **characterized in that** electrode structures (7), which each form a sensor (8) with the cellulose (6) of the first layer (3), are repeatedly provided over the entire web length (L) of the building material (1).

3. Building material according to claim 2, **characterized in that** the electrode structures (7) are arranged in series (15, 16) one after the other.

4. Building material according to claim 3, **characterized in that** the electrode structures (7) are arranged in a plurality of rows (15, 16), more particularly in two rows (15, 16), which are offset relative to one another.

5. Building material according to one of claims 2 to 4, **characterized in that** the first layer (3) has printed-on electrical conductors (9, 10, 14) which electrically connect the electrode structures (7) extending in the longitudinal direction of the web.

6. Building material according to claim 5, **characterized in that** the electrical conductors (9, 10, 14) consist of forward conductors (9.1) and return conductors (10.1, 14.1), to which forward and return conductors (9.1, 10.1, 14.1) the electrode structures (7) are electrically connected in parallel.

7. Building material according to claim 6, **characterized in that** each row (15, 16) of electrode structures (7) is connected in an electrically parallel manner to a forward and a return conductor (9.1, 10.1 or 9.1, 14.1).

8. Building material according to one of claims 5 to 7, **characterized in that** the electrode structures (7) are arranged between the electrical conductors (9, 10, 14).

9. Building material according to one of claims 5 to 8, **characterized in that** electrical conductors (9, 10, 14) extend along the longitudinal edge (1.2, 1.3) of the web.

10. Building material according to one of claims 1 to 9, **characterized in that** the printed, electrically conductive electrode structure (7) consists of a solid paste or ink with a carbon base.

11. Building material according to one of claims 1 to 10, **characterized in that** the first layer (3) comprises a biocidal, fungicidal and/or bactericidal active ingredient as filler (13).

12. Building material according to one of claims 1 to 11, **characterized in that** the first layer (3) has a proportion of cellulose (6) of 60 to 90%, preferably 65 to 79%, more particularly 72%, and filler (13) as the remainder.

13. Building material according to one of claims 1 to 12, **characterized in that** the first layer (3) has a basis weight of more than 70 g/m², more particularly 90 g/m².

14. Building material according to one of claims 1 to 13, **characterized in that** the first layer is a label paper.

15. Building material according to one of claims 1 to 14, **characterized in that** the backing material layer (4) has a release agent (4.1), more particularly silicone.

16. Building material according to one of claims 1 to 15, **characterized in that** the electrode structure (7) forms a moisture and/or temperature sensor (8) with the cellulose (6) of the first layer (3).

17. Building material according to one of claims 1 to 16, **characterized in that** the electrode structure (7) has interlocking finger electrodes (7.1, 7.2).

18. Building material according to one of claims 1 to 17, **characterized in that** the distance (A) between two successive electrode structures (7) is greater than or equal to 0.5 m, more particularly greater than or equal to 2 m.

## Revendications

1. Matériau de construction, en particulier matériau de construction de toitures, sous forme de rouleaux ou de lés, avec une structure composite (2) comprenant une première couche (3), une couche de matériau de support (4) et une couche d'adhésif (5) disposée entre la couche de matériau de support (4) et la première couche (3), dans lequel la première couche (3) est reliée à demeure à la couche d'adhésif (5) et la couche de matériau de support (4) est reliée à la couche d'adhésif (5) de façon amovible, **caractérisé en ce que** la première couche (3) contient aussi bien de la cellulose (6) qu'au moins une structure d'électrodes (7) conductrice électrique imprimée sur la face de la couche (3.1) tournée à l'opposé de la couche de matériau de support (4), qui forme un capteur (8) avec la cellulose (6) de la première couche (3), des structures d'électrodes (7) formant chacune un capteur (8) avec la cellulose (6) de la première couche (3) étant prévues de façon répétée sur la longueur de lé (L) du matériau de construction (1).

2. Matériau de construction selon la revendication 1, **caractérisé en ce que** des structures d'électrodes (7) formant chacune un capteur (8) avec la cellulose (6) de la première couche (3) sont prévues de façon répétée sur toute la longueur de lé (L) du matériau de construction (1).

3. Matériau de construction selon la revendication 2, **caractérisé en ce que** les structures d'électrodes (7) sont disposées les unes après les autres en rangée (15, 16).

4. Matériau de construction selon la revendication 3, **caractérisé en ce que** les structures d'électrodes (7) sont disposées en plusieurs, en particulier deux, rangées (15, 16) décalées les unes par rapport aux autres.

5. Matériau de construction selon l'une des revendications 2 à 4, **caractérisé en ce que** la première couche (3) comporte des conducteurs électriques imprimés (9, 10, 14) qui courent dans le sens longitudinal du lé et connectent électriquement les structures d'électrodes (7).

6. Matériau de construction selon la revendication 5, **caractérisé en ce que** les conducteurs électriques (9, 10, 14) se composent de conducteurs d'aller (9.1) et de conducteurs de retour (10.1, 14.1), les structures d'électrodes (7) étant connectées les unes aux autres dans un montage électrique en parallèle sur ces conducteurs d'aller et de retour (9.1, 10.1, 14.1).

7. Matériau de construction selon la revendication 6, **caractérisé en ce que** chaque rangée (15, 16) est connectée dans un montage électrique en parallèle à des structures d'électrodes (7) sur un conducteur d'aller et un conducteur de retour (9.1, 10.1 ou 9.1, 14.1 respectivement).

8. Matériau de construction selon l'une des revendications 5 à 7, **caractérisé en ce que** les structures d'électrodes (7) sont disposées entre les conducteurs électriques (9, 10, 14).

9. Matériau de construction selon l'une des revendications 5 à 8, **caractérisé en ce que** des conducteurs électriques (9, 10, 14) courent sur le bord longitudinal du lé (1.2, 1.3).

10. Matériau de construction selon l'une des revendications 1 à 9, **caractérisé en ce que** la structure d'électrodes (7) imprimée et conductrice électrique se compose d'une pâte ferme ou d'une encre à base de carbone.

11. Matériau de construction selon l'une des revendications 1 à 10, **caractérisé en ce que** la première couche (3) comporte un principe actif biocide, fongicide et/ou bactéricide sous la forme d'une matière de charge (13).

12. Matériau de construction selon l'une des revendications 1 à 11, **caractérisé en ce que** la première couche (3) contient une proportion de cellulose (6) de 60 à 90 %, de préférence de 65 à 79 %, en particulier de 72 %, le reste étant de la matière de charge (13).

13. Matériau de construction selon l'une des revendications 1 à 12, **caractérisé en ce que** la première couche (3) a un poids par unité de surface supérieur à 70 g/m², en particulier 90 g/m²

14. Matériau de construction selon l'une des revendications 1 à 13, **caractérisé en ce que** la première couche est un papier pour étiquettes.

15. Matériau de construction selon l'une des revendications 1 à 14, **caractérisé en ce que** la couche de matériau de support (4) contient un agent de séparation (4.1), en particulier du silicone.

16. Matériau de construction selon l'une des revendications 1 à 15, **caractérisé en ce que** la structure d'électrodes (7) forme avec la cellulose (6) de la première couche (3) un capteur d'humidité et/ou de température (8).

17. Matériau de construction selon l'une des revendications 1 à 16, **caractérisé en ce que** la structure d'électrodes (7) présente des électrodes en languettes (7.1, 7.2) qui engrènent les unes dans les autres.

18. Matériau de construction selon l'une des revendications 1 à 17, **caractérisé en ce que** la distance (A) entre deux structures d'électrodes (7) successives est égale ou supérieure à 0,5 m, en particulier supérieur ou égal à 2 m.
